# EUROPEAN PATENT SPECIFICATION

(11) **EP 4 439 785 B1**
(45) Date of publication and mention of the grant of the patent: **28.01.2026**
(21) Application number: 24158855.7
(22) Date of filing: 21.02.2024
(51) Int. Cl.: H01M 10/48, H01M 50/209, H01M 50/291, H01M 50/507, H01M 50/529, H01M 50/296, H01M 50/55

(54) **BATTERY PACK WITH IMPROVED ANTI-MOVEMENT AND ASSEMBLY AND FIXING STRUCTURE FOR HIGH-CURRENT BUS BAR**
BATTERIEPACK MIT VERBESSERTER ANTIBEWEGUNG SOWIE ANORDNUNG UND BEFESTIGUNGSSTRUKTUR FÜR EINE HOCHSTROMSAMMELSCHIENE
BLOC-BATTERIE À ANTI-MOUVEMENT AMÉLIORÉ ET STRUCTURE D'ASSEMBLAGE ET DE FIXATION POUR BARRE OMNIBUS À COURANT ÉLEVÉ

(30) Priority: 26.03.2023 KR 20230039349; 06.04.2023 KR 20230045442
(43) Date of publication of application: 02.10.2024
(73) Proprietor: Samsung SDI Co., Ltd., Yongin-si, Gyeonggi-do 17084 (KR)
(72) Inventor: JUNG, Jungkyun, 17084 Yongin-si (KR); YOON, Gwangtaek, 17084 Yongin-si (KR); RYU, Jaelim, 17084 Yongin-si (KR); WOO, Beomjun, 17084 Yongin-si (KR)
(74) Representative: Marks & Clerk LLP

(56) References cited:
- EP-A1- 4 095 986
- CN-A- 113 782 904
- CN-B- 110 071 237
- US-A1- 2019 221 817

## Description

### BACKGROUND

### 1. Field

One or more embodiments relate to an installation structure of a high-current bus bar of a battery pack.

### 2. Description of the Related Art

Due to the development from traditional internal combustion engine vehicles to electric vehicles or hybrid vehicles, batteries used in vehicles have become more important component devices. For a long-distance electric vehicle, because a large-capacity battery device is employed, the battery becomes a core component of the vehicle.

In a battery pack for an electric vehicle, a plurality of battery modules are arranged inside a housing having a space therein. Also, a plurality of battery modules may be combined to form a subpack. The battery modules are electrically connected to each other. Also, the battery pack includes a bus bar for electrical connection of electronic units, such as a battery management system (BMS) or a battery disconnect unit (BDU) that controls the charging of the subpack.

A large current flows through the bus bar. The high-current bus bar has a long bus bar shape including a long structure due to the configuration of the battery pack. The bus bar configured as such is subject to vibration during operation of a vehicle, and may receive a strong external force in the event of a vehicle collision accident. In such a state, a crack or physical damage may occur in the bus bar.

EP 4 095 986 A1, US 2019/221817 A1, CN 11 0071 237 B and CN 113 782 904 A provide disclosures relating to battery packs.

### SUMMARY

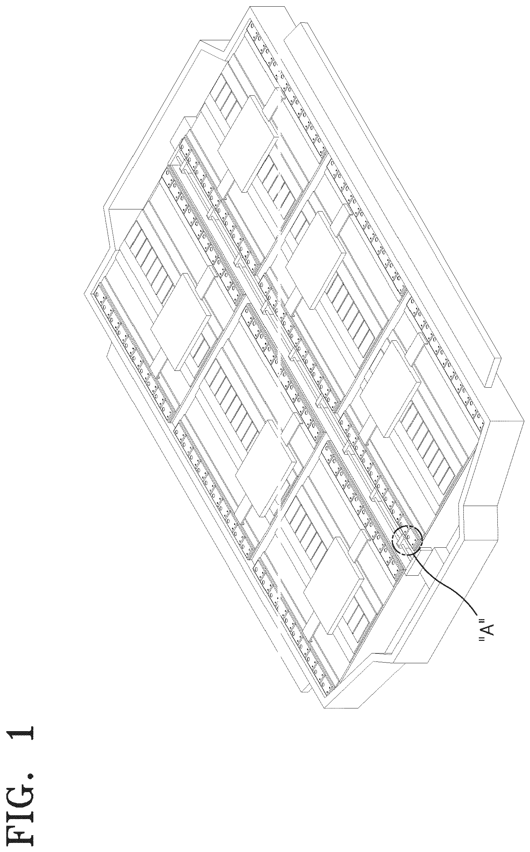

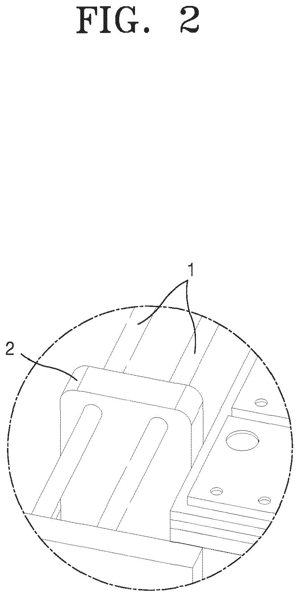

To address the above issue of a crack or other physical damage that may occur in the bus bar, in a battery pack of a comparative example, separate components, such as a plurality of fixing brackets 2 or clips may be installed at a bus bar 1, as illustrated in FIGS. 1 and 2. However, in this structure, because additional components, such as the plurality of fixing brackets 2 or clips are used, the assemblability (i.e. the ease and efficiency of assembling the battery pack) thereof may be relatively poor, and the manufacturing cost of the battery device may increase due to an increase in the number of components.

One or more embodiments include a battery pack including an improved installation structure of a bus bar to improve durability and assemblability and reduce the manufacturing costs.

Additional aspects will be set forth in part in the description which follows and, in part, will be apparent from the description, or may be learned by practice of the presented embodiments of the disclosure.

According to one or more embodiments, as a battery pack with a fixing structure for a bus bar, the battery pack including battery modules including battery cells, a first electrical connection between the battery cells a second electrical connection between the battery modules, a battery manager configured to control charging and discharging of the battery modules, a connector including a third electrical connection between an output terminal of one of the battery modules and the battery manager, a housing for accommodating the battery modules, including a housing first wall portion and a housing second wall portion that are opposite to each other, and defining an open portion with one side opened to accommodate the connector, a cross beam extending between the housing first wall portion and the housing second wall portion, and including a cross beam bottom opposite to the open portion, and a pair of cross beam sidewalls between the open portion and the cross beam bottom, and an insulating cover including a base plate covering the open portion of the cross beam in which the connector is accommodated, and a spacer protrusion piece protruding from the base plate toward the connector to support the connector.

The connector may include a first connector and a second connector extending in parallel to each other to be between the housing first wall portion and the housing second wall portion.

The first connector and the second connector may each include a wide side surface facing a corresponding one of the cross beam sidewalls, and a narrow side surface facing the open portion or the cross beam bottom. The terms "wide" and "narrow" here may be interpreted as mutually relative terms, such that the "wide" side surface is wider than the "narrow" side surface, without implying any specific width of either surface.

The spacer protrusion piece may face one of the cross beam sidewalls, the wide side surface of the first connector, or the wide side surface of the second connector, and may extend to face a portion of the one of the cross beam sidewalls, the wide side surface of the first connector, or the wide side surface of the second connector that is adjacent to the base plate.

The first connector and the second connector may respectively face the cross beam sidewalls, wherein the spacer protrusion piece includes a first spacer protrusion piece between one of the cross beam sidewalls and the first connector, and a second spacer protrusion piece between another of the cross beam sidewalls and the second connector.

The spacer protrusion piece may further include a third spacer protrusion piece between the first connector and the second connector.

The first spacer protrusion piece or the second spacer protrusion piece may include an anti-separation projection configured to be coupled to a groove portion defined by one of the cross beam sidewalls.

The housing may include a housing bottom defining an accommodation space for accommodating the battery modules, housing sidewalls extending from the housing bottom, and surrounding the battery modules, and a housing cover for covering the accommodation space. The terms "bottom" and "side" may be interpreted as being relative to the battery pack, and not implying any particular orientation of the battery pack.

The housing cover and the insulating cover may define an electrically insulated mounting space.

The battery pack may further include a wiring assembly connected to the battery module or to the battery manager in the mounting space.

The base plate may define a component mounting hole or includes a rib structure.

At least some of the above and other features of the invention are set out in the claims.

### BRIEF DESCRIPTION OF THE DRAWINGS

The above and other aspects of certain embodiments of the disclosure will be more apparent from the following description taken in conjunction with the accompanying drawings, in which:
FIG. 1 is a diagram illustrating an example of a bus bar installation structure of a battery pack of a comparative example;
FIG. 2 is an enlarged view of a region "A" in FIG. 1;
FIG. 3 is a diagram illustrating a bus bar installation structure of a battery pack according to some embodiments;
FIG. 4 is an exploded perspective view of main components illustrated in FIG. 3;
FIG. 5 is an enlarged view of a region "B" in FIG. 3;
FIG. 6 is a cross-sectional view taken along line VI-VI in FIG. 5; and
FIG. 7 is a diagram corresponding to FIG. 6 and illustrating a structure according to one or more other embodiments.

### DETAILED DESCRIPTION

Aspects of some embodiments of the present disclosure and methods of accomplishing the same may be understood more readily by reference to the detailed description of embodiments and the accompanying drawings. The described embodiments are provided as examples so that this disclosure will be thorough and complete, and will fully convey the aspects of the present disclosure to those skilled in the art. Accordingly, processes, elements, and techniques that are redundant, that are unrelated or irrelevant to the description of the embodiments, or that are not necessary to those having ordinary skill in the art for a complete understanding of the aspects of the present disclosure may be omitted. Unless otherwise noted, like reference numerals, characters, or combinations thereof denote like elements throughout the attached drawings and the written description, and thus, repeated descriptions thereof may be omitted.

The described embodiments may have various modifications and may be embodied in different forms, and should not be construed as being limited to only the illustrated embodiments herein. The present disclosure covers all modifications, equivalents, and replacements within the idea and technical scope of the present disclosure. Further, each of the features of the various embodiments of the present disclosure may be combined or combined with each other, in part or in whole, and technically various interlocking and driving are possible. Each embodiment may be implemented independently of each other or may be implemented together in an association.

In the drawings, the relative sizes of elements, layers, and regions may be exaggerated for clarity and/or descriptive purposes. Additionally, the use of cross-hatching and/or shading in the accompanying drawings is generally provided to clarify boundaries between adjacent elements. As such, neither the presence nor the absence of cross-hatching or shading conveys or indicates any preference or requirement for particular materials, material properties, dimensions, proportions, commonalities between illustrated elements, and/or any other characteristic, attribute, property, etc., of the elements, unless specified.

Various embodiments are described herein with reference to sectional illustrations that are schematic illustrations of embodiments and/or intermediate structures. As such, variations from the shapes of the illustrations as a result of, for example, manufacturing techniques and/or tolerances, are to be expected. Further, specific structural or functional descriptions disclosed herein are merely illustrative for the purpose of describing embodiments according to the concept of the present disclosure. Thus, embodiments disclosed herein should not be construed as limited to the illustrated shapes of elements, layers, or regions, but are to include deviations in shapes that result from, for instance, manufacturing.

Spatially relative terms, such as "beneath," "below," "lower," "lower side," "under," "above," "upper," "upper side," and the like, may be used herein for ease of explanation to describe one element or feature's relationship to another element(s) or feature(s) as illustrated in the figures. It will be understood that the spatially relative terms are intended to encompass different orientations of the device in use or in operation, in addition to the orientation depicted in the figures. For example, if the device in the figures is turned over, elements described as "below," "beneath," "or "under" other elements or features would then be oriented "above" the other elements or features. Thus, the example terms "below" and "under" can encompass both an orientation of above and below. The device may be otherwise oriented (e.g., rotated 90 degrees or at other orientations) and the spatially relative descriptors used herein should be interpreted accordingly. Similarly, when a first part is described as being arranged "on" a second part, this indicates that the first part is arranged at an upper side or a lower side of the second part without the limitation to the upper side thereof on the basis of the gravity direction.

Further, the phrase "in a plan view" means when an object portion is viewed from above, and the phrase "in a schematic cross-sectional view" means when a schematic cross-section taken by vertically cutting an object portion is viewed from the side. The terms "overlap" or "overlapped" mean that a first object may be above or below or to a side of a second object, and vice versa. Additionally, the term "overlap" may include layer, stack, face or facing, extending over, covering, or partly covering or any other suitable term as would be appreciated and understood by those of ordinary skill in the art. The expression "not overlap" may include meaning, such as "apart from" or "set aside from" or "offset from" and any other suitable equivalents as would be appreciated and understood by those of ordinary skill in the art. The terms "face" and "facing" may mean that a first object may directly or indirectly oppose a second object. In a case in which a third object intervenes between a first and second object, the first and second objects may be understood as being indirectly opposed to one another, although still facing each other.

It will be understood that when an element, layer, region, or component is referred to as being "formed on," "on," "connected to," or "(operatively or communicatively) coupled to" another element, layer, region, or component, it can be directly formed on, on, connected to, or coupled to the other element, layer, region, or component, or indirectly formed on, on, connected to, or coupled to the other element, layer, region, or component such that one or more intervening elements, layers, regions, or components may be present. In addition, this may collectively mean a direct or indirect coupling or connection and an integral or non-integral coupling or connection. For example, when a layer, region, or component is referred to as being "electrically connected" or "electrically coupled" to another layer, region, or component, it can be directly electrically connected or coupled to the other layer, region, and/or component or intervening layers, regions, or components may be present. However, "directly connected/directly coupled," or "directly on," refers to one component directly connecting or coupling another component, or being on another component, without an intermediate component. In addition, in the present specification, when a portion of a layer, a film, an area, a plate, or the like is formed on another portion, a forming direction is not limited to an upper direction but includes forming the portion on a side surface or in a lower direction. On the contrary, when a portion of a layer, a film, an area, a plate, or the like is formed "under" another portion, this includes not only a case where the portion is "directly beneath" another portion but also a case where there is further another portion between the portion and another portion. Meanwhile, other expressions describing relationships between components such as "between," "immediately between" or "adjacent to" and "directly adjacent to" may be construed similarly. In addition, it will also be understood that when an element or layer is referred to as being "between" two elements or layers, it can be the only element or layer between the two elements or layers, or one or more intervening elements or layers may also be present.

For the purposes of this disclosure, expressions such as "at least one of," or "any one of," or "one or more of" when preceding a list of elements, modify the entire list of elements and do not modify the individual elements of the list. For example, "at least one of X, Y, and Z," "at least one of X, Y, or Z," "at least one selected from the group consisting of X, Y, and Z," and "at least one selected from the group consisting of X, Y, or Z" may be construed as X only, Y only, Z only, any combination of two or more of X, Y, and Z, such as, for instance, XYZ, XYY, YZ, and ZZ, or any variation thereof. Similarly, the expression such as "at least one of A and B" and "at least one of A or B" may include A, B, or A and B. As used herein, "or" generally means "and/or," and the term "and/or" includes any and all combinations of one or more of the associated listed items. For example, the expression such as "A and/or B" may include A, B, or A and B. Similarly, expressions such as "at least one of," "a plurality of," "one of," and other prepositional phrases, when preceding a list of elements, modify the entire list of elements and do not modify the individual elements of the list.

It will be understood that, although the terms "first," "second," "third," etc., may be used herein to describe various elements, components, regions, layers and/or sections, these elements, components, regions, layers and/or sections should not be limited by these terms. These terms do not correspond to a particular order, position, or superiority, and are used only used to distinguish one element, member, component, region, area, layer, section, or portion from another element, member, component, region, area, layer, section, or portion. Thus, a first element, component, region, layer or section described below could be termed a second element, component, region, layer or section, without departing from the spirit and scope of the present disclosure. The description of an element as a "first" element may not require or imply the presence of a second element or other elements. The terms "first," "second," etc. may also be used herein to differentiate different categories or sets of elements. For conciseness, the terms "first," "second," etc. may represent "first-category (or first-set)," "second-category (or second-set)," etc., respectively.

The terminology used herein is for the purpose of describing embodiments only and is not intended to be limiting of the present disclosure. As used herein, the singular forms "a" and "an" are intended to include the plural forms as well, while the plural forms are also intended to include the singular forms, unless the context clearly indicates otherwise. It will be further understood that the terms "comprises," "comprising," "have," "having," "includes," and "including," when used in this specification, specify the presence of the stated features, integers, steps, operations, elements, and/or components, but do not preclude the presence or addition of one or more other features, integers, steps, operations, elements, components, and/or groups thereof.

As used herein, the term "substantially," "about," "approximately," and similar terms are used as terms of approximation and not as terms of degree, and are intended to account for the inherent deviations in measured or calculated values that would be recognized by those of ordinary skill in the art. "About" or "approximately," as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, 5% of the stated value. Further, the use of "may" when describing embodiments of the present disclosure refers to "one or more embodiments of the present disclosure."

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

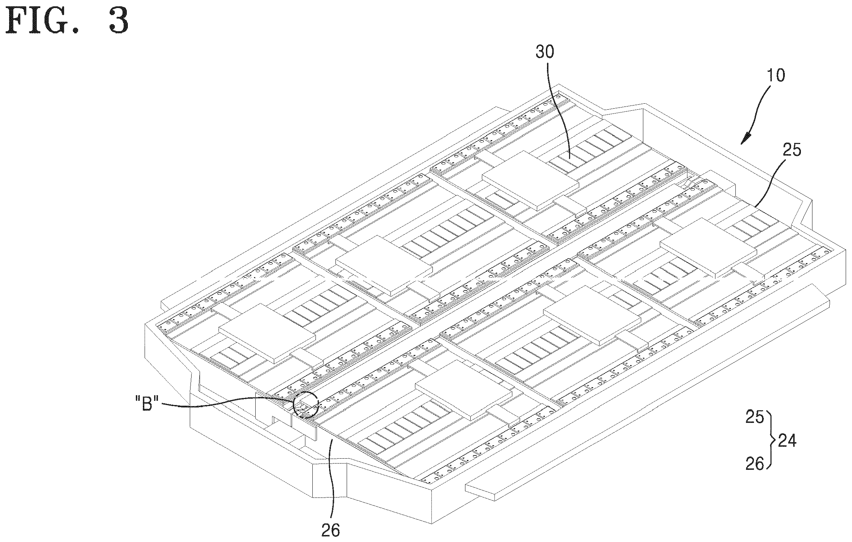

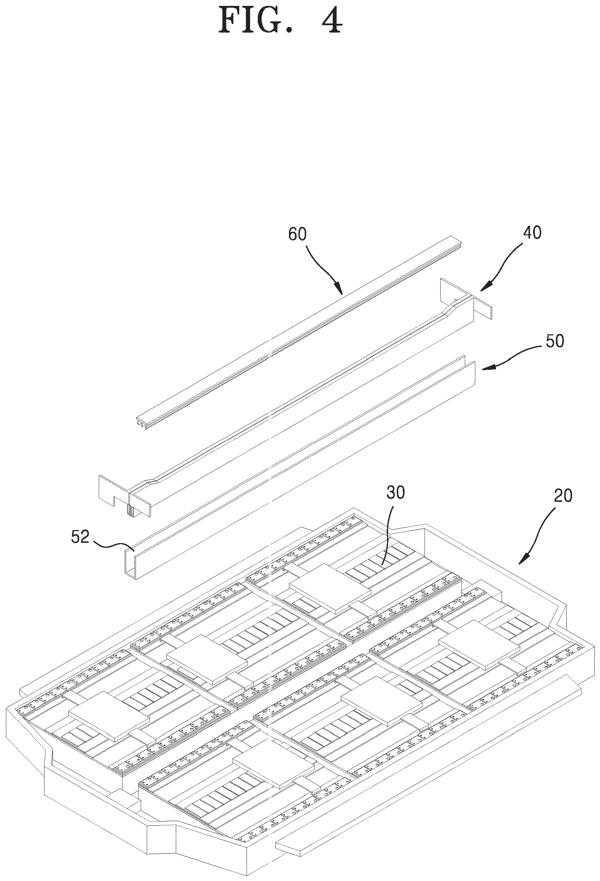

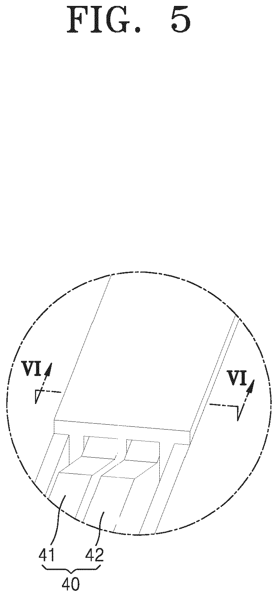

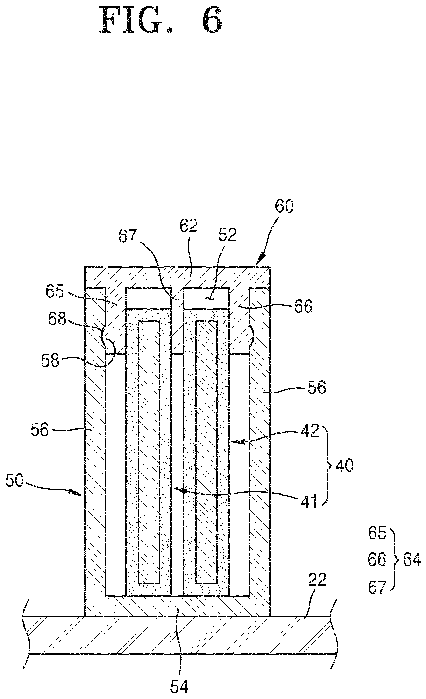

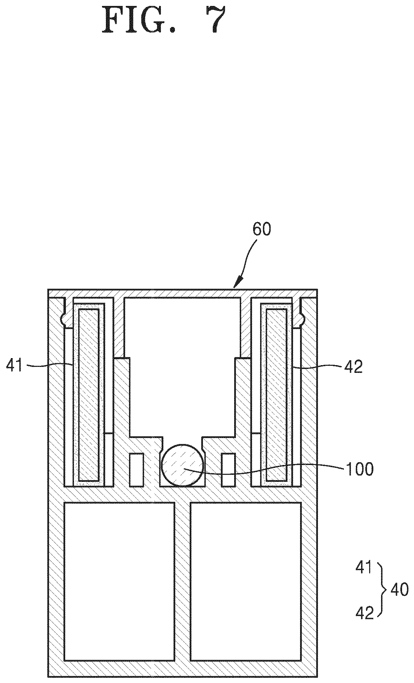

FIG. 3 is a diagram illustrating a bus bar installation structure of a battery pack according to some embodiments. FIG. 4 is an exploded perspective view of the components illustrated in FIG. 3. FIG. 5 is an enlarged view of a region "B" in FIG. 3. FIG. 6 is a cross-sectional view taken along line VI-VI in FIG. 5. FIG. 7 is a diagram corresponding to FIG. 6 and illustrating a structure according to one or more other embodiments.

Referring to FIGS. 3 to 7, a battery pack 10 with an improved fixing structure for a high-current bus bars having improved anti-movement and assembly properties, according to some embodiments (hereinafter referred to as a "battery pack"), may include a housing 20, a plurality of battery modules 30, a battery manager (not shown), a connector 40, a cross beam 50, and an insulating cover 60.

The housing 20 may include a housing bottom 22, a housing sidewall 24, and a housing cover (not shown).

The housing bottom 22 may form an accommodation space in which the plurality of battery modules 30 are accommodated.

The housing sidewall 24 may be a structure extending from the housing bottom 22. The housing sidewall 24 may be configured to surround the plurality of battery modules 30. For example, the housing sidewall 24 may form a rectangular box shape with respective sidewalls being arranged perpendicular to each other. For example, housing sidewalls 24 respectively arranged at opposite directions and facing each other may be defined as a housing first wall portion 25 and a housing second wall portion 26. These portions may for example be seen as portions of the housing sidewall 24.

The housing cover may be a structure covering the accommodation space. The housing cover may be fixed to the housing sidewall 24.

The battery module 30 may be installed in the accommodation space formed in the housing 20. The battery module 30 may be provided as a plurality of battery modules. The battery module 30 may include a plurality of battery cells electrically assembled with each other. A first electrical connection structure may be included for electrical connection between the plurality of battery cells included in the battery module 30. A second electrical connection structure may be provided to connect the different battery modules 30 to each other.

The battery manager may be a device that controls the charging/discharging of the battery module 30. The battery manager may collectively control the charging/discharging of the plurality of battery modules 30.

The connector 40 may be a component forming a third electrical connection between an output terminal of the battery module 30 and the battery manager. The connector 40 may also be generally referred to as a bus bar. The connector 40 may include a first connector 41 and a second connector 42 that form a third electrical connection with respect to the different battery modules 30 while extending in parallel to each other to intersect a space between the housing first wall portion 25 and the housing second wall portion 26.

The cross beam 50 may be arranged to extend across between the housing first wall portion 25 and the housing second wall portion 26 of the housing 20, which are opposite to each other. The cross beam 50 may accommodate the connector 40. The cross beam 50 may include an open portion 52, a cross beam bottom 54, and a cross beam sidewall 56.

The open portion 52 may be an open surface of the cross beam 50. For example, the open portion 52 may be configured such that an upper portion of the cross beam 50 is open. The cross beam 50 may be fastened to (e.g., connected to or assembled to/with) the housing 20 to support the housing 20 to have improved stability and rigidity. The cross beam 50 may be manufactured by extrusion molding, for example.

The cross beam bottom 54 may be a closed surface arranged to be opposite to the open portion 52.

The cross beam sidewall 56 may be formed between the open portion 52 and the cross beam bottom 54. The cross beam sidewall 56 may be provided as a pair of cross beam sidewalls. A vertical cross-section of the cross beam 50 may have, for example, a "U" shape. The first connector 41 and the second connector 42 may be arranged to face a pair of cross beam sidewalls 56 constituting the cross beam 50. The first connector 41 and the second connector 42 may include a relatively wide side surface facing the cross beam sidewall 56, and a relatively narrow side surface facing the open portion 52 or the cross beam bottom 54. Moreover, as illustrated in FIG. 7, if a structure of the cross beam bottom 54 is modified, a component, such as an LV CON 100, may be installed inside the cross beam 50. The LV CON 100 means Low Voltage Connector.

The insulating cover 60 may be a structure covering the open portion of the cross beam 50 in which the connector 40 is accommodated. The insulating cover 60 may be manufactured by, for example, extrusion-molding a silicone resin. The insulating cover 60 may include a base plate 62 and a spacer protrusion piece 64.

The base plate 62 may be a long plate-shaped structure as a whole. The base plate 62 may be arranged to close the open portion 52.

The spacer protrusion piece 64 may be a structure protruding from the base plate 62 toward the connector 40. The spacer protrusion piece 64 may support the connector 40. The spacer protrusion piece 64 may include a first spacer protrusion piece 65 and a second spacer protrusion piece 66. The first spacer protrusion piece 65 may be arranged between one of the pair of cross beam sidewalls 56 and the first connector 41. The second spacer protrusion piece 66 may be arranged between the other of the pair of cross beam sidewalls 56 and the second connector 42. The spacer protrusion piece 64 may face the cross beam sidewall 56 and/or the wide side of the first connector 41 and/or the second connector 42, and may extend with a short protrusion length to face a portion of the cross beam sidewall 56 or first or second connectors 41 or 42 relatively adjacent to the base plate 62.

An anti-separation projection 68 coupled to, or within, a groove portion 58, which is formed in, or defined by, the cross beam sidewall 56, may be formed at the first spacer protrusion piece 65 and at the second spacer protrusion piece 66.

The spacer protrusion piece 64 may further include a third spacer protrusion piece 67 arranged between the first connector 41 and the second connector 42. The third spacer protrusion piece 67 may more reliably maintain the insulating state between the first connector 41 and the second connector 42.

A mounting space electrically insulated by the housing cover and the insulating cover 60 may be formed between the housing cover and the insulating cover 60. A wiring assembly connected to the battery module 30 or the battery manager may be arranged in the mounting space. The base plate 62 may include a component mounting hole or a rib structure. For example, the wiring assembly may be fixed to the component mounting hole or the rib structure.

Hereinafter, the operation and effect of the battery pack 10 including the above components will be described in detail by taking a process of installing the connector 40 as an example.

The plurality of battery modules 30 and the battery manager may be installed in the accommodation space formed in the housing 20 constituting the battery pack 10. The cross beam 50 may be installed at the housing 20. The cross beam 50 may be pre-assembled to the housing 20 before the installation of the battery module 30. The cross beam 50 may be assembled to the housing 20 by an uneven structure. For example, such an uneven structure may have a geometric shape which causes the cross beam 50 to attach to the housing 20 e.g. by friction. Moreover, the cross beam 50 may be assembled to the housing 20 by, for example, an uneven structure, bolt, or bonding.

The connector 40 may be installed inside the cross beam 50 through the open portion of the cross beam 50. One end portion of the connector 40 may be electrically connected to the output terminal of the battery module 30. The other end portion of the connector 40 may be electrically connected to the battery manager.

The insulating cover 60 may be coupled to the cross beam 50. The spacer protrusion piece 64 included in the insulating cover 60 may be fixed to the cross beam 50 in a state where the connector 40 is stably supported. In this process, the anti-separation projection 68 may be elastically modified, or deformed, in the assembly process, and may be accommodated in the groove portion 58 formed in the cross beam sidewall 56 in a state where the assembly is completed. In this state, the third spacer protrusion piece 67 may be arranged between the first connector 41 and the second connector 42 to more reliably maintain the insulation state between the first connector 41 and the second connector 42. Also, electric wiring or the like may be fixed to the component mounting hole or to the rib structure formed in the base plate 62.

As described above, in the battery pack according to the disclosure, because a connector is accommodated inside a cross beam that extends across between a housing first wall portion and a housing second wall portion, which are opposite to each other, and which are of a housing accommodating a plurality of battery modules, and because the cross beam includes an open portion with one side opened to accommodate the connector, which is stably fixed by an insulating cover covering the open portion of the cross beam, the connector may be prevented from being separated from an installation position by an unexpected external force. Further, because the connector is fixed by the insulating cover, and thus a separate structure for fixing the connector is not required, the number of components may be reduced, and thus the manufacturing cost thereof may be reduced.

Also, in the battery pack according to the disclosure, because a package space is provided on the upper side of the insulating cover, or in the internal space of the cross beam, an installation space for additional wires or a connector structure may be suitably configured.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the scope as defined by the following claims.

## Claims

1. A battery pack (10) with a fixing structure for a bus bar, the battery pack comprising:
battery modules (30) comprising battery cells;
a first electrical connection between the battery cells:
a second electrical connection between the battery modules;
a battery manager configured to control charging and discharging of the battery modules;
a connector (40) comprising a third electrical connection between an output terminal of one of the battery modules and the battery manager, the connector being a bus bar;
a housing (20) for accommodating the battery modules, comprising a housing first wall portion (25) and a housing second wall portion (26) that are opposite to each other, and defining an open portion with one side opened to accommodate the connector;
a cross beam (50) extending between the housing first wall portion and the housing second wall portion, and comprising a cross beam bottom (54) opposite to the open portion, and a pair of cross beam sidewalls (56) between the open portion and the cross beam bottom; and
an electrically insulating cover (60) comprising a base plate (62) covering the open portion of the cross beam in which the connector is accommodated, and a spacer protrusion piece (65, 66, 67) protruding from the base plate toward the connector to support the connector.

2. The battery pack as claimed in claim 1, wherein the connector comprises a first connector and a second connector extending in parallel to each other to be between the housing first wall portion and the housing second wall portion.

3. The battery pack as claimed in claim 2, wherein the first connector (41) and the second connector (42) each comprise a wide side surface facing a corresponding one of the cross beam sidewalls (56), and a narrow side surface facing the open portion or the cross beam bottom (54), the wide side surface being wider than the narrow side surface.

4. The battery pack as claimed in claim 3, wherein the spacer protrusion piece (62) faces one of the cross beam sidewalls (56) , the wide side surface of the first connector (41), or the wide side surface of the second connector (42), and extends to face a portion of the one of the cross beam sidewalls (56), the wide side surface of the first connector (41), or the wide side surface of the second connector (42) that is adjacent to the base plate (62).

5. The battery pack as claimed in claim 2, wherein the first connector and the second connector respectively face the cross beam sidewalls, and
wherein the spacer protrusion piece comprises a first spacer protrusion piece between one of the cross beam sidewalls and the first connector, and a second spacer protrusion piece between another of the cross beam sidewalls and the second connector.

6. The battery pack as claimed in claim 5, wherein the spacer protrusion piece further comprises a third spacer protrusion piece between the first connector and the second connector.

7. The battery pack as claimed in claim 5 or claim 6, wherein the first spacer protrusion piece or the second spacer protrusion piece comprises an anti-separation projection configured to be coupled to a groove portion defined by one of the cross beam sidewalls.

8. The battery pack as claimed in any preceding claim, wherein the housing comprises:
a housing bottom defining an accommodation space for accommodating the battery modules;
housing sidewalls extending from the housing bottom, and surrounding the battery modules; and
a housing cover for covering the accommodation space.

9. The battery pack as claimed in claim 8, wherein the housing cover and the insulating cover define an electrically insulated mounting space.

10. The battery pack as claimed in claim 9, further comprising a wiring assembly connected to the battery module or to the battery manager in the mounting space.

11. The battery pack as claimed in any preceding claim, wherein the base plate defines a component mounting hole or comprises a rib structure.

## Patentansprüche

1. Batteriepack (10) mit einer Befestigungsstruktur für eine Sammelschiene, wobei der Batteriepack Folgendes umfasst:
Batteriemodule (30), die Batteriezellen umfassen;
eine erste elektrische Verbindung zwischen den Batteriezellen:
eine zweite elektrische Verbindung zwischen den Batteriemodulen;
einen Batteriemanager, der dafür konfiguriert ist, das Laden und Entladen der Batteriemodule zu steuern;
einen Verbinder (40), der eine dritte elektrische Verbindung zwischen einem Ausgangsanschluss eines der Batteriemodule und dem Batteriemanager umfasst, wobei der Verbinder eine Sammelschiene ist;
ein Gehäuse (20) zum Aufnehmen der Batteriemodule, das einen ersten Gehäusewandabschnitt (25) und einen zweiten Gehäusewandabschnitt (26) umfasst, die einander gegenüberliegen, und einen offenen Abschnitt definiert, dessen eine Seite geöffnet ist, um den Verbinder aufzunehmen;
einen Querträger (50), der sich zwischen dem ersten Gehäusewandabschnitt und dem zweiten Gehäusewandabschnitt erstreckt und einen Querträgerboden (54) gegenüber dem offenen Abschnitt und ein Paar Querträgerseitenwände (56) zwischen dem offenen Abschnitt und dem Querträgerboden umfasst; und
eine elektrisch isolierende Abdeckung (60), die eine Grundplatte (62), die den offenen Abschnitt des Querträgers abdeckt, in dem der Verbinder aufgenommen ist, und ein Abstandshalterstück (65, 66, 67) umfasst, das von der Grundplatte in Richtung des Verbinders vorspringt, um den Verbinder zu stützen.

2. Batteriepack nach Anspruch 1, wobei der Verbinder einen ersten Verbinder und einen zweiten Verbinder umfasst, die sich parallel zueinander erstrecken, sodass sie zwischen dem ersten Gehäusewandabschnitt und dem zweiten Gehäusewandabschnitt sind.

3. Batteriepack nach Anspruch 2, wobei der erste Verbinder (41) und der zweite Verbinder (42) jeweils eine breite Seitenfläche, die einer entsprechenden der Querträgerseitenwände (56) zugewandt ist, und eine schmale Seitenfläche umfassen, die dem offenen Abschnitt oder dem Querträgerboden (54) zugewandt ist, wobei die breite Seitenfläche breiter als die schmale Seitenfläche ist.

4. Batteriepack nach Anspruch 3, wobei das Abstandshalter-Vorsprungsstück (62) einer der Querträgerseitenwände (56), der breiten Seitenfläche des ersten Verbinders (41) oder der breiten Seitenfläche des zweiten Verbinders (42) zugewandt ist, und sich so erstreckt, dass es einem an die Grundplatte (62) angrenzenden Abschnitt der einen der Querträgerseitenwände (56), der breiten Seitenfläche des ersten Verbinders (41) oder der breiten Seitenfläche des zweiten Verbinders (42) zugewandt ist.

5. Batteriepack nach Anspruch 2, wobei der erste Verbinder und der zweite Verbinder jeweils den Querträgerseitenwänden zugewandt sind, und
wobei das Abstandshalter-Vorsprungsstück ein erstes Abstandshalter-Vorsprungsstück zwischen einer der Querträgerseitenwände und dem ersten Verbinder und ein zweites Abstandshalter-Vorsprungsstück zwischen einer anderen der Querträgerseitenwände und dem zweiten Verbinder umfasst.

6. Batteriepack nach Anspruch 5, wobei das Abstandshalter-Vorsprungsstück weiter ein drittes Abstandshalter-Vorsprungsstück zwischen dem ersten Verbinder und dem zweiten Verbinder umfasst.

7. Batteriepack nach Anspruch 5 oder Anspruch 6, wobei das erste Abstandshalter-Vorsprungsstück oder das zweite Abstandshalter-Vorsprungsstück einen Trennschutzvorsprung umfasst, der dafür konfiguriert ist, mit einem Nutabschnitt gekoppelt zu werden, der durch eine der Querträgerseitenwände definiert ist.

8. Batteriepack nach einem vorstehenden Anspruch, wobei das Gehäuse Folgendes umfasst:
einen Gehäuseboden, der einen Aufnahmeraum für die Batteriemodule definiert;
Gehäuseseitenwände, die sich vom Gehäuseboden erstrecken und die Batteriemodule umgeben; und
eine Gehäuseabdeckung zum Abdecken des Aufnahmeraums.

9. Batteriepack nach Anspruch 8, wobei die Gehäuseabdeckung und die isolierende Abdeckung einen elektrisch isolierten Montageraum bilden.

10. Batteriepack nach Anspruch 9, weiter einen Kabelbaum umfassend, der mit dem Batteriemodul oder mit dem Batteriemanager im Montageraum verbunden ist.

11. Batteriepack nach einem vorstehenden Anspruch, wobei die Grundplatte ein Komponentenmontageloch definiert oder eine Rippenstruktur umfasst.

## Revendications

1. Bloc-batterie (10) avec une structure de fixation pour une barre omnibus, le bloc-batterie comprenant :
des modules de batterie (30) comprenant des éléments de batterie ;
une première connexion électrique entre les éléments de batterie :
une deuxième connexion électrique entre les modules de batterie ;
un gestionnaire de batterie configuré pour commander la charge et la décharge des modules de batterie ;
un connecteur (40) comprenant une troisième connexion électrique entre une borne de sortie de l'un des modules de batterie et le gestionnaire de batterie, le connecteur étant une barre omnibus ;
un boîtier (20) destiné à loger les modules de batterie, comprenant une première partie de paroi de boîtier (25) et une seconde partie de paroi de boîtier (26) qui sont opposées l'une à l'autre, et définissant une partie ouverte avec un côté ouvert pour loger le connecteur ;
une traverse (50) s'étendant entre la première partie de paroi de boîtier et la seconde partie de paroi de boîtier, et comprenant une partie inférieure de traverse (54) opposée à la partie ouverte, et une paire de parois latérales de traverse (56) entre la partie ouverte et la partie inférieure de traverse ; et
un couvercle électriquement isolant (60) comprenant une plaque de base (62) recouvrant la partie ouverte de la traverse dans laquelle le connecteur est logé, et une pièce saillante d'espacement (65, 66, 67) faisant saillie de la plaque de base vers le connecteur pour soutenir le connecteur.

2. Bloc-batterie selon la revendication 1, dans lequel le connecteur comprend un premier connecteur et un second connecteur s'étendant parallèlement l'un à l'autre pour se trouver entre la première partie de paroi de boîtier et la seconde partie de paroi de boîtier.

3. Bloc-batterie selon la revendication 2, dans lequel le premier connecteur (41) et le second connecteur (42) comprennent chacun une surface latérale large faisant face à l'une correspondante des parois latérales de traverse (56), et une surface latérale étroite faisant face à la partie ouverte ou à la partie inférieure de traverse (54), la surface latérale large étant plus large que la surface latérale étroite.

4. Bloc-batterie selon la revendication 3, dans lequel la pièce saillante d'espacement (62) fait face à l'une des parois latérales de traverse (56), à la surface latérale large du premier connecteur (41) ou à la surface latérale large du second connecteur (42), et s'étend pour faire face à une partie de l'une des parois latérales de traverse (56), de la surface latérale large du premier connecteur (41) ou de la surface latérale large du second connecteur (42) qui est adjacente à la plaque de base (62).

5. Bloc-batterie selon la revendication 2, dans lequel le premier connecteur et le second connecteur font respectivement face aux parois latérales de traverse, et
dans lequel la pièce saillante d'espacement comprend une première pièce saillante d'espacement entre l'une des parois latérales de traverse et le premier connecteur, et une deuxième pièce saillante d'espacement entre l'autre des parois latérales de traverse et le second connecteur.

6. Bloc-batterie selon la revendication 5, dans lequel la pièce saillante d'espacement comprend en outre une troisième pièce saillante d'espacement entre le premier connecteur et le second connecteur.

7. Bloc-batterie selon la revendication 5 ou la revendication 6, dans lequel la première pièce saillante d'espacement ou la deuxième pièce saillante d'espacement comprend une projection anti-séparation configurée pour être couplée à une partie de rainure définie par l'une des parois latérales de traverse.

8. Bloc-batterie selon une quelconque revendication précédente, dans lequel le boîtier comprend :
une partie inférieure de boîtier définissant un espace de logement destiné à loger les modules de batterie ;
des parois latérales de boîtier s'étendant depuis la partie inférieure de boîtier et entourant les modules de batterie ; et
un couvercle de boîtier pour recouvrir l'espace de logement.

9. Bloc-batterie selon la revendication 8, dans lequel le couvercle de boîtier et le couvercle isolant définissent un espace de montage électriquement isolé.

10. Bloc-batterie selon la revendication 9, comprenant en outre un ensemble câblage connecté au module de batterie ou au gestionnaire de batterie dans l'espace de montage.

11. Bloc-batterie selon une quelconque revendication précédente, dans lequel la plaque de base définit un trou de montage de composant ou comprend une structure nervurée.
